# EUROPEAN PATENT SPECIFICATION

(11) **EP 2 986 843 B1**
(45) Date of publication and mention of the grant of the patent: **30.05.2018**
(21) Application number: 14785179.4
(22) Date of filing: 14.04.2014
(51) Int. Cl.: F03B 13/18, E02B 9/08

(54) **ARRANGEMENT FOR UTILIZING WAVE ENERGY**
ANORDNUNG ZUR NUTZUNG VON WELLENENERGIE
AGENCEMENT DE RÉCUPÉRATION DE L'ÉNERGIE DES VAGUES

(30) Priority: 18.04.2013 FI 20135384
(43) Date of publication of application: 24.02.2016
(73) Proprietor: Tampereen ammattikorkeakoulu Oy, 33520 Tampere (FI)
(72) Inventor: RAIKAMO, Esko, 33880 Lempäälä (FI); OIKARAINEN, Markku, 37560 Lempäälä (FI); HIETALAHTI, Lauri, 33980 Pirkkala (FI)
(74) Representative: Kolster Oy Ab
(86) International application number: PCT/FI2014/050267
(87) International publication number: WO 2014/170540

(56) References cited:
- WO-A1-2011/126451
- WO-A1-2011/154511
- DE-A1-102011 101 409
- SU-A1- 1 460 394
- SU-A1- 1 460 394
- US-A- 5 889 336
- US-A1- 2009 211 240

## Description

### Background

The invention relates to an arrangement for recovering wave energy.

Numerous arrangements are known for recovering wave energy of water.

A problem with the known solutions is inter alia that they operate at quite low efficiency. SU 1 460 394 discloses an arrangement for recovering wave energy. US 5 889 336 discloses a power generating installation. US 2009/211240 discloses an apparatus for converting wave energy to rotational energy

### Brief description

An object of the present invention is to provide a novel and improved arrangement for recovering wave energy.

The arrangement according to the invention is characterised by what is disclosed in the characterising parts of the independent claims.

According to the invention the arrangement comprises a flotation piece arrangeable to float in water, a first and a second transmission wheel arranged in the flotation piece rotatably and spaced apart from one another, a pull-transmitting flexible machine part arranged into power-transmitting contact with the first and the second transmission wheel, the flexible machine part at its both ends extending outside the flotation piece, a counterweight arranged at a first end of the flexible machine part, anchoring means arranged at a second end of the flexible machine part, at least one generator arranged in the flotation piece, and means for converting motion of both the first and the second transmission wheels into motion rotating the at least one generator, the transmission wheels are arranged at a distance from the centre of gravity of the flotation piece, on different sides thereof and the flotation piece comprises at least two flotation blocks pivotably fastened to one another by a joint.

The idea of the invention is that the transmission wheels arranged spaced apart from one another in the flotation piece perform extensive motion with respect to the flexible machine part.

An advantage of the invention is that it enables the motion of the flotation piece swaying along with waves to be efficiently converted into motion rotating an electric generator. A further advantage is that the electric generator can be rotated preferably uninterruptedly.

According to the invention the transmission wheels are arranged at a distance from the centre of gravity of the flotation piece, on different sides thereof. The advantage is that the waves make the transmission wheels move efficiently.

According to an embodiment at least one generator is arranged to be directly rotated by the transmission wheel. The advantage is that power losses can be minimized.

According to an embodiment both the first and the second transmission wheels are provided with a generator of their own connected thereto. The advantage is that the solution is structurally simple.

According to an embodiment at least one generator is arranged to be indirectly rotated by the transmission wheel so that the motion of the transmission wheel is transmitted, converted, to the generator. The advantage is that the rotational speed of the generator can be optimized.

According to an embodiment between the transmission wheel and the generator is connected a mechanical rectifier which is arranged to convert reciprocating rotational motion of the transmission wheel into one-directional rotational motion rotating the generator. The advantage is that the one-directional rotational motion involves no changes of direction to interrupt the generation of electricity. According to an embodiment the flexible machine part comprises an electric conductor connected to at least one generator to conduct electric current generated by the generator away from the flotation piece. The advantage is that the flexible machine part protects the electric conductor.

According to an embodiment the flotation piece comprises at least two flotation blocks pivotably fastened to one another by a joint, and that the transmission wheels are arranged in different blocks. The advantage is that motions between the transmission wheels and the flexible machine part can be extended.

According to an embodiment pull-transmitting flexible machine part is a wire rope. The advantage is that the wire rope is a simple and reliably operating machine part.

According to an embodiment the arrangement comprises a converter which is arranged in the bottom of a water basin and to which one or more flotation pieces are connected. The advantage is that the converter is well protected at the bottom of the water basin.

### Brief description of the figures

Some embodiments of the invention are explained in closer detail in the accompanying drawings, in which
Figure 1 is a schematic sectional side view of an arrangement not part of the invention,
Figure 2 is a schematic sectional side view of a second arrangement not part of the invention,
Figures 3a and 3b are schematic sectional side views of an arrangement according to the invention, and
Figures 4a to 4c are schematic side views of operation of a mechanical rectifier.

For the sake of clarity, the figures show some embodiments of the invention in a simplified manner. In the figures, like reference numerals identify like elements.

### Detailed description

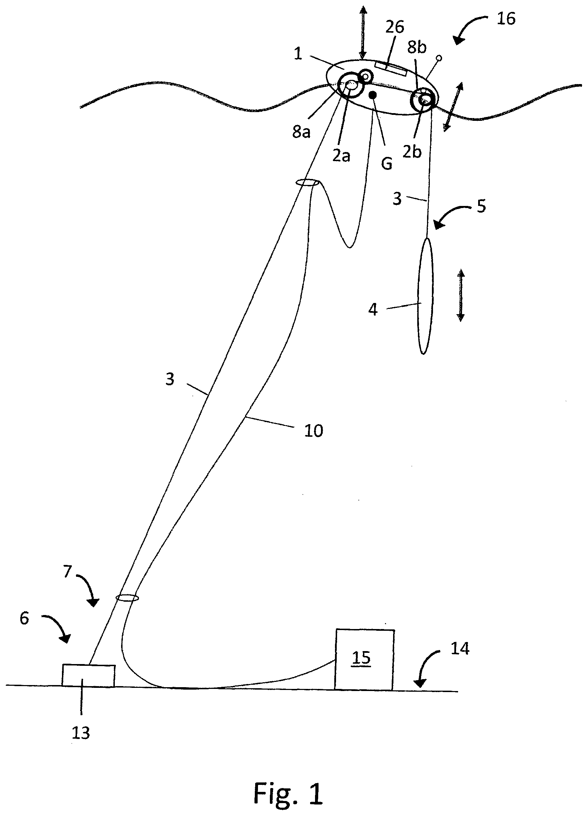

Figure 1 is a schematic sectional side view of an arrangement not part of the invention.

The arrangement includes a flotation piece 1 which floats in water and moves due to the influence of the water's motion.

The flotation piece 1 may be made of any suitable material or a combination of materials, e.g. metal, plastic, composite material, etc.

The flotation piece 1 may comprise one or more cavities such that buoyancy provided by the cavities carries the flotation piece on the surface of the water.

In its side profile, the shape of the flotation piece 1 shown in the figure is an ellipsoid, but this shape may of course also be another one, e.g. a circle, a polygon, wing-like, drop-like, etc.

Further, as viewed from above, the shape of the flotation piece 1 may be a circle, an ellipsoid, a polygon, drop-like, etc. According to an idea, the shape is elongated, such a shape enabling the position of the flotation piece to be controlled as desired with respect to the waves.

In the disclosed embodiment, an outer surface of the flotation piece 1 is substantially even and projectionless. According to an idea, the outer surface may be provided with projections, such as a fin operating below water level, or a sail or a wing operating above water level. The projection may function to orientate the flotation piece with respect to the waves or direction of the wind.

The flotation piece 1 is provided with a first transmission wheel 2a and a second transmission wheel 2b. The transmission wheels 2a, 2b are both allowed to rotate about their rotation axis with respect to the flotation piece 1. The transmission wheels 2a, 2b are arranged mutually in the same line which is parallel with a longitudinal centre line of the flotation piece 1 - most preferably in the centre line of the flotation piece 1.

Preferably, the rotation axes are arranged in a horizontal plane, i.e. they are in the horizontal plane when the flotation piece 1 floats in completely quiescent water. The rotation axes may be arranged fixedly with respect to the longitudinal direction of the flotation piece 1 so that when the flotation piece 1 tilts with respect to its longitudinal axis in a lateral direction, the rotation axes also tilt in an equal extent. According to another idea, the rotation axes are arranged floatingly in the flotation piece 1 so that they strive to remain in the horizontal plane irrespective of the flotation piece swaying in the lateral direction.

The transmission wheels 2a, 2b are arranged spaced apart from one another so that the first transmission wheel 2a - or at least its rotation axis - resides on a first side of the centre of gravity G of the flotation piece and, correspondingly, the second transmission wheel 2b on a second side thereof. Thus, the transmission wheels 2a, 2b move alternately up and down as the flotation piece 1 bounces and turns around its centre of gravity G.

In the present embodiment, the transmission wheels 2a, 2b are arranged inside the flotation piece 1. According to another idea, at least one transmission wheel 2a, 2b is arranged partly or completely outside the flotation piece 1.

Each transmission wheel 2a, 2b serves as a rope pulley which is in power-transmitting contact with the pull-transmitting flexible machine part 3. Most preferably, the flexible machine part is a steel rope, i.e. a wire rope, whose bearing structure consists of a set of steel wires. Of course, a pull-transmitting flexible machine part 3 of another kind, such as a cable or a chain, may also be used.

The flexible machine part 3 is arranged in a rope slot provided in the transmission wheel 2a, 2b, and its both ends extend out of the flotation piece 1. A first end 5 of the flexible machine part 3 is provided with a counterweight 4 while a second end 7 thereof is provided with anchoring means 6. The length of the flexible machine part 3 is with respect to the depth of water arranged such that the counterweight 4 resides in the water between the water level and the bottom of the water basin.

When designing the length, not only the depth of water but also expected lateral displacements of the flotation piece 1 off from above the anchoring means 6 caused by waves and wind typically occurring at the site of the arrangement are taken into account. It is particularly to be ensured that the counterweight 4 does not ascend to the flotation piece 1 and, on the other hand, descend all the way to the bottom.

According to an idea, the counterweight 4 is arranged, expressed by means of significant wave length λ, at a depth which is preferably about 0.25 x λ to 0.5 x λ with respect to a quiescent water level.

By means of the anchoring means 6, the arrangement is fastened to a stationary target, typically a fastening element 13, which is mounted with respect to a bottom 14 of the water basin or directly at the bottom 14 of the water basin. The fastening element 13 may comprise functional components and systems to be discussed in more detail below.

It is to be noted that the water basin may be a natural water basin, such as a sea, a lake or a river, or at least a partly man-made water basin, such as a man-made lake or a reservoir.

The flotation piece 1 further comprises at least one generator generating electricity and means for converting the motion of both the first and the second transmission wheels 2a, 2b into motion rotating the generator.

In the embodiment shown in Figure 1, the flotation piece 1 is provided with two generators 8a, 8b. Each generator 8a, 8b is arranged to be directly rotated by the corresponding transmission wheel 2a, 2b, in other words both the first and the second transmission wheels 2a, 2b are provided with a generator 8a, 8b of their own connected thereto. According to an idea, the transmission wheel 2a, 2b is arranged directly on the axis of the corresponding generator 8a, 8b. According to another idea, between the transmission wheel 2a, 2b and the corresponding generator 8a, 8b is arranged a power transmission means for changing a transmission ratio.

The generator 8a, 8b may be any electricity-generating generator known per se but, most preferably, it is a generator of the permanently magnetized generator type. The generator 8a, 8b generates electricity irrespective of the direction in which it is rotated.

The flotation piece 1 moves due to the influence of the motion of the waves in a vertical direction as well as in a horizontal direction. The transmission wheels 2a, 2b also move along with the motion of the flotation piece 1 in the vertical and horizontal directions. Between the transmission wheels 2a, 2b and the flexible machine part 3 is generated motion which forces the transmission wheels 2a, 2b in to rotating, reciprocating motion. An angle of rotation of rotational motion taking place at a time may be very small, e.g. from some degrees to some tens of degrees, after which the direction of the rotational motion is reversed. The extent of the rotational motion and the frequency of reversions depend on the frequency and height of the waves directed at the flotation piece 1 as well as on the properties of the flotation piece 1 and the counterweight 4. Owing to the distance between the transmission wheels 2a, 2b, they are most often in mutually different phases of the wave motion and thus in a different state of motion. At least one of the transmission wheels 2a, 2b and thus at least one of the generators 8a, 8b is rotating in some direction, generating electric current to be forwarded for further use.

According to an idea, the electric current from the generators 8a, 8b of the flotation piece 1 is delivered in to connection with the flexible machine part or to an electric conductor 10 integrated therein and, therethrough, to the bottom 14 of the water basin or to an electric switchgear 15 arranged in the fastening element 13, for instance. This may comprise components and elements to influence the properties of the electric current, such as rectifiers or inverters, converters, etc. The components and elements may have the generators of one or more flotation pieces connected thereto.

The electric current may be discharged from the arrangement in known manners.

The arrangement may comprise a data collection unit 16 which may collect data about the state and operation of the arrangement itself, weather conditions, properties of the waves, etc. The collected data may be transmitted wirelessly out of the arrangement.

The energy required by the data collection unit 16 may be obtained for instance from an accumulator that may be recharged from the generators 2a, 2b or for instance from a solar collector arranged on an upper surface of the flotation piece 1.

The upper surface of the flotation piece 1 may be provided with a service hatch 26 enabling the components contained in the flotation piece 1 to be serviced and repaired.

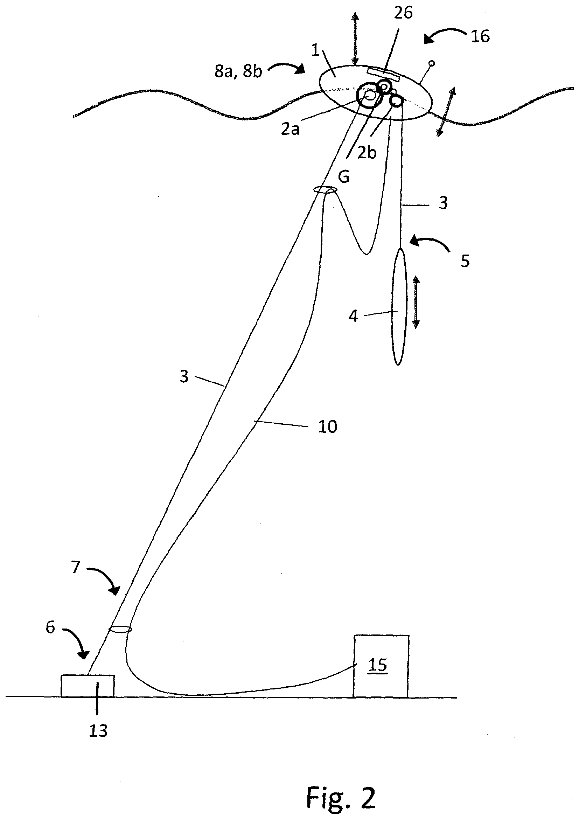

**Figure 2** is a schematic sectional side view of a second arrangement not part of the invention.

For the most part, the arrangement is as the arrangement shown in Figure 1 but, however, differs therefrom at least in that the transmission wheels 2a, 2b are arranged substantially closer to one another. Consequently, the motion of the flotation piece 1 according to Figure 2 mostly takes place in the vertical direction and less in the horizontal direction. Such an arrangement is particularly suited for the horizontal direction in cramped applications wherein the flotation piece 1 has no space to move in the plane of the water level.

According to an idea, the distance of the transmission wheels 2a, 2b - meaning the distance between the bosses of the wheels in question - is selected with respect to a typical significant wave height A of the application so that the distance of the transmission wheels 2a, 2b is preferably 0.6 x A to 1.5 x A. In such a case, the flotation piece 1 moves on the surface of the water in extensive movements in both the vertical and the horizontal directions.

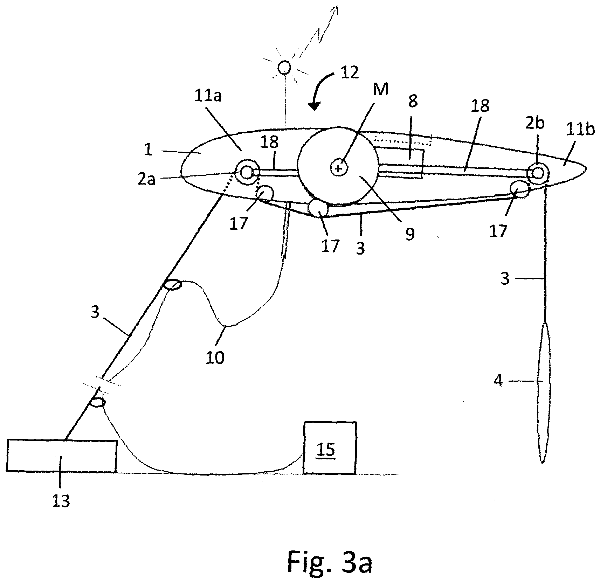

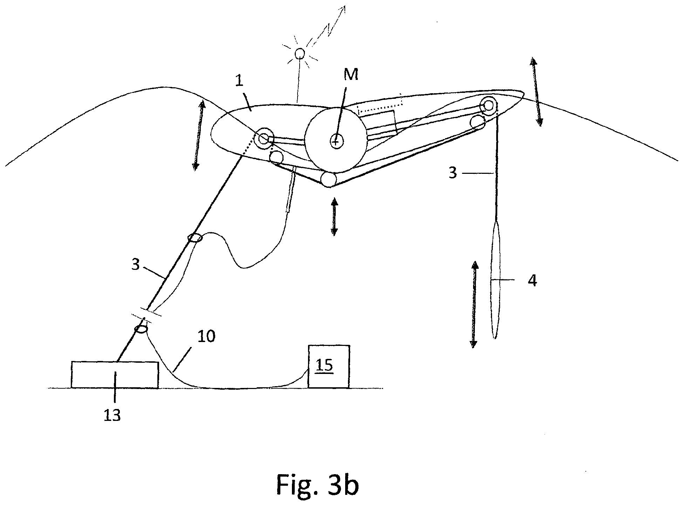

**Figures 3a** **and** **3b** are schematic sectional side views of an arrangement according to the invention.

The flotation piece 1 now comprises two flotation blocks 11a, 11b fastened pivotably to one another by a joint 12. The flotation blocks 11a, 11b are allowed to twist or turn with respect to one another and thus move along with the waves partially irrespective of one another.

The first transmission wheel 2a is arranged in a first flotation block 11a, and the second transmission wheel 2b is arranged in a second flotation block 11b. In a multi-element flotation piece, the distance between the transmission wheels 2a, 2b may be greater with respect to the wave length and/or wave height of the water than in a single-element flotation piece. This enables the motion of the transmission wheels 2a, 2b to be greater, i.e. more powerful, and the recovery of electric energy to be higher.

In addition to the transmission wheels 2a, 2b, the flotation piece 1 may comprise guide wheels 17 which guide the flexible machine part 3 and which guide the flexible machine part 3 to take the most suitable route, taking the structural aspects of the flotation piece 1 and the efficiency of collecting energy into account. In the embodiment shown in Figure 3a, the guide wheels 17 guide the flexible machine part 3 out of the flotation piece 1 over a section between the transmission wheels 2a, 2b. A goal may be to increase the distance of the flexible machine part 3, the wire rope, from a pivot axis M of the joint 12; this may be used for increasing the extent of the motion of the flexible machine part 3 with respect to the transmission wheels 2a, 2b. Of course, such guide wheels 17 may also be used in single-element flotation pieces 1.

The flotation piece 1 now comprises only one generator 8, arranged to be rotated by both transmission wheels 2a, 2b. As distinct from the embodiments shown in the previous figures, the transmission wheels 2a, 2b thus indirectly rotate the generator 8. For this purpose, both transmission wheels 2a, 2b are provided with a power-transmitting power transmission connection 18 to the generator 8. Most preferably, the power transmission connection 18 may be implemented by mechanical power transmission means, such as chains, cogwheels and/or axes.

In addition, between the transmission wheel 2a, 2b and the generator 8, a mechanical rectifier 9 is connected to convert reciprocating rotational motion of the transmission wheel 2a, 2b into one-directional rotational motion rotating the generator 8. In other words, the generator 8 is rotated in one and the same direction, irrespective of the direction of rotation of the transmission wheel 2a, 2b. The mechanical rectifier 9 also enables the transmission wheels 2a, 2b to rotate at a different speed and in different directions. A mechanical rectifier 9 will be discussed later in this description.

According to another idea, rather than a mechanical rectifier 9, freewheel clutches having the same coupling direction are provided between the transmission wheel 2a, 2b and the generator 8 arranged to be rotated thereby. In such a case, differences may exist between the rotational states of the transmission wheels 2a, 2b but rotational motion occurring only in the coupling direction is used for rotating the generator 8 - rotational motion occurring in the opposite direction is not transmitted to the generator 8.

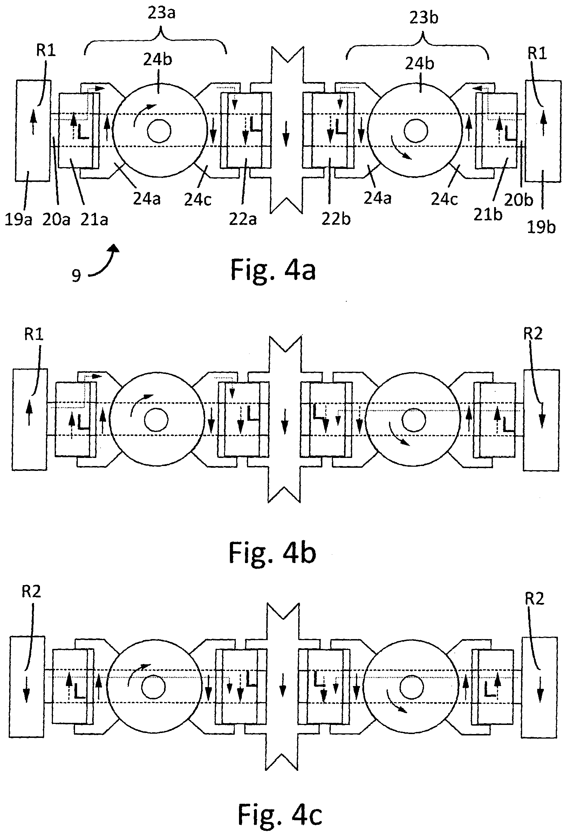

**Figures 4a to 4c** are schematic side views of operation of a mechanical rectifier.

The rectifier 9 is provided with two reception members 19a, 19b connected to the first and the second transmission wheels 2a, 2b, respectively. The reception members 19a, 19b thus perform reciprocating rotational motion.

The reciprocating motion of the reception members 19a, 19b is transmitted to two power take-off axes 20a, 20b, each being connected to one reception member 19a, 19b.

In the power take-off axes 20a, 20b, the reception members 19a, 19b produce reciprocating, rotational motion in a direction of the periphery of the axis, the direction of the rotational motion being indicated by arrows R1, R2 in Figures 4a to 4c.

In the state shown in Figure 4a, both reception members 19a, 19b are turning in a first direction R1.

Both power take-off axes 20a, 20b are provided with first locking members 21a, 21b and second locking members 22a, 22b, freewheel clutches, for instance. The freewheel clutches have an outer circle and an inner circle, and locking members therebetween. The circles may rotate freely with respect to one another in one rotating direction, but they are prevented from rotating in the opposite direction by means of the locking members. An engaging direction of the freewheel clutches is indicated by arrow L in the figure. The freewheel clutches are structures known per se; therefore, they will not be discussed in closer detail herein.

The locking members may be not only freewheel clutches but also braking devices or other stop devices which may be locked and unlocked appropriately in a suitable manner as far as the operation of the power transmission device is concerned, for instance electrically.

In the figure, the locking direction of the first freewheel clutches 21a, 21b is such that when the power take-off axis 20a, 20b turns in the first direction R1, the first freewheel clutches 21a, 20b are locked and the rotational motion is transmitted to reversing members 23a, 23b; the locking direction of the second freewheel clutches 22a, 22b, in turn, is reverse to the locking direction of the first freewheel clutches 21a, 21b, in which case the direction of rotation of the axis 20a, 20b is in their idle direction, the power of the axis 20a, 20b therefore not being transmitted forward via the second freewheel clutches 22a, 22b.

In the embodiment disclosed herein, the reversing members 23a, 23b comprise three bevel gearwheels 24a, 24b, 24c such that adjacent ones are in mesh and substantially at a 90° angle with respect to one another so that a first gearwheel 24a and a third gearwheel 24c are arranged coaxially with the power take-off axis 20a, 20b. A second gearwheel 24b is pivotably mounted to a frame of the rectifier 9, for instance; for the sake of clarity, no frame is shown in the figure.

The power take-off axis 20a, 20b is arranged to pass through the first and the third gearwheels 24a, 24c and the reversing members 23a, 23b such that the power take-off axis 20a, 20b is freely rotating with respect to the gearwheels 24a, 24b, 24c and the reversing means 23a, 23b.

The rotational motion is transmitted from the power take-off axis 20a, 20b via the first freewheel clutch 21a, 21b to the first gearwheel 24a, to the second gearwheel 24b and further to the third gearwheel 24c of the reversing member 23a, 23b, the direction of rotation of the third gearwheel 24c being reverse to the direction of rotation of the power take-off axis 20a, 20b.

In the third gearwheel 24c is arranged the outer circle of the second freewheel clutch 22a, 22b, on which outer circle a power-yielding member 25 is also arranged for taking off power. A belt pulley now serves as the power-yielding member 25, the direction of rotation of the belt pulley being indicated by an arrow in the figure.

The direction of rotation of the power-yielding member 25 is thus reverse to the direction of rotation of the power take-off axis 20a, 20b, i.e. to the first direction R1. In order to take off power, it is of course also possible to use members other than a belt pulley, such as a gearwheel, an angle transmission or another suitable member enabling power to be forwarded in a simple and easy manner to the generator 8.

In Figure 4b, the shown direction of rotation of the first power take-off axis 20a is still the first direction R1, but the direction of rotation of the second power take-off axis 20b has become reversed, i.e. the second direction R2. Since the second power take-off axis 20b now rotates in the idle direction of the first freewheel clutch 21b, the rotational motion is not transmitted to the second reversing member 23b. Instead, the rotational motion of the second power take-off axis 20b occurs in the locking direction of the second freewheel clutch 22b arranged on the axis, in which case the rotational motion is transmitted to the power-yielding member 25 via the second freewheel clutch 22b. The second power take-off axis 20b and the power-yielding member 25 thus have the same direction of rotation.

The rotational motion of the second power take-off axis 20b is transmitted via the second freewheel clutch 22b not only to the power-yielding member 25 but also to the reversing member 23b. The reversing member 23b always rotates in the same direction, irrespective of the direction of rotation of the power take-off axis 20b. However, the rotational motion of the reversing member 23b is not transmitted via the first freewheel clutch 21b to the axis 20b since the rotational motion in question occurs in the idle direction of the first freewheel clutch 21b.

In Figure 4c, the direction of rotation of the first power take-off axis 20a is also in the second direction R2. The rotational motion of both power take-off axes 20a, 20b is transmitted to the power-yielding member 25 in a manner described in connection with Figure 1b. Irrespective of the rotation of the reception members 19a, 19b, i.e. the transmission wheels 2a, 2b, the rotational motion of the power-yielding member 25 always occurs in the same direction and as continuous as possible. Thus, the generator 8 connected to the power-yielding member 25 always rotates in the same direction and as continuously as possible.

It is to be noted, however, that the structure of the mechanical rectifier may, of course, also be different.

It is apparent to one skilled in the art that as technology advances, the basic idea of the invention may be implemented in many different ways. In some cases, features disclosed in this application may be used as such, regardless of other features. On the other hand, when necessary, features disclosed in this application may be combined in order to provide different combinations. The invention and its embodiments are thus not restricted to the above-described examples provided for the sake of illustration, but the invention may vary within the scope of the claims.

The drawings and the related description are only intended to illustrate the idea of the invention. In its details, the invention may vary within the scope of the claims.

### Reference numerals

- 1: flotation piece
- 2a, 2b: transmission wheel
- 3: pull-transmitting flexible machine part
- 4: counterweight
- 5: first end
- 6: anchoring means
- 7: second end
- 8, 8a, 8b: generator
- 9: mechanical rectifier
- 10: electric conductor
- 11a, 11b: flotation block
- 12: joint
- 13: fastening element
- 14: bottom of water basin
- 15: electric switchgear
- 16: data collection unit
- 17: guide wheel
- 18: power transmission connection
- 19a, 19b: reception member
- 20a, 20b: power take-off axis
- 21a, 21b: first locking member
- 22a, 22b: second locking member
- 23a, 23b: reversing member
- 24a, 24b, 24c: bevel gearwheel
- 25: power-yielding member
- 26: service hatch
- G: centre of gravity of flotation piece
- M: pivot axis
- R1, R2: direction of rotation

## Claims

1. An arrangement for recovering wave energy, comprising:
a flotation piece (1) arrangeable to float in water,
a first and a second transmission wheel (2a, 2b) arranged in the flotation piece (1) rotatably and spaced apart from one another,
a pull-transmitting flexible machine part (3) arranged into power-transmitting contact with the first and the second transmission wheel (2a, 2b), the flexible machine part (3) at its both ends extending outside the flotation piece (1),
a counterweight (4) arranged at a first end (5) of the flexible machine part (3),
anchoring means (6) arranged at a second end (7) of the flexible machine part,
at least one generator (8) arranged in the flotation piece (1), and
means for converting motion of both the first and the second transmission wheels (2a, 2b) into motion rotating the at least one generator (8),the transmission wheels (2a, 2b) are arranged at a distance from the centre of gravity (G) of the flotation piece (1), on different sides thereof, **characterized in that**
the flotation piece (1) comprises at least two flotation blocks (11a, 11b) pivotably fastened to one another by a joint (12).

2. An arrangement as claimed in claim 1, **characterized in that** at least one generator (8) is arranged to be directly rotated by the transmission wheel (2a, 2b).

3. An arrangement as claimed in claim 2, **characterized in that** both the first and the second transmission wheels (2a, 2b) are provided with a generator (8) of their own connected thereto.

4. An arrangement as claimed in claim 1, **characterized in that** at least one generator (8) is arranged to be indirectly rotated by the transmission wheel (2a, 2b) so that the motion of the transmission wheel (2a, 2b) is transmitted, converted, to the generator (8).

5. An arrangement as claimed in claim 4, **characterized in that** between the transmission wheel (2a, 2b) and the generator (8) is connected a mechanical rectifier (9) which is arranged to convert reciprocating rotational motion of the transmission wheel (2a, 2b) into one-directional rotational motion rotating the generator.

6. An arrangement as claimed in any one of the preceding claims, **characterized in that** the flexible machine part (3) comprises an electric conductor (10) connected to at least one generator (8) to conduct electric current generated by the generator away from the flotation piece (1).

7. An arrangement as claimed in any one of the preceding claims, **characterized in that** the pull-transmitting flexible machine part (3) is a wire rope.

8. An arrangement as claimed in any one of the preceding claims, **characterized in that** the anchoring means (6) comprise a fastening element (13) mounted at a bottom of the water basin.

## Patentansprüche

1. Einrichtung zur Nutzung von Wellenenergie, die umfasst:
einen Schwimmkörper (1), der so angeordnet werden kann, dass er in Wasser schwimmt,
ein erstes und ein zweites Übertragungs-Rad (2a, 2b), die in dem Schwimmkörper (1) drehbar und voneinander beabstandet angeordnet sind,
einen flexiblen Maschinenteil (3) zum Übertragen von Zug, der in Kraftübertragungs-Kontakt mit dem ersten und dem zweiten Übertragungs-Rad (2a, 2b) angeordnet ist, wobei sich der flexible Maschinenteil (3) an seinen beiden Enden von dem Schwimmkörper (1) nach außen erstreckt,
ein Gegengewicht (4), das an einem ersten Ende (5) des flexiblen Maschinenteils (3) angeordnet ist,
eine Verankerungseinrichtung (6), die an einem zweiten Ende (7) des flexiblen Maschinenteils angeordnet ist,
wenigstens einen Generator (8), der in dem Schwimmkörper (1) angeordnet ist, und
eine Einrichtung zum Umwandeln von Bewegung sowohl des ersten als auch des zweiten Übertragungsrades (2a, 2b) in Bewegung, durch die der wenigstens eine Generator (8) gedreht wird, wobei die Übertragungsräder (2a, 2b) in einem Abstand zu dem Schwerpunkt (G) des Schwimmkörpers (1) an verschiedenen Seiten desselben angeordnet sind, **dadurch gekennzeichnet, dass**
der Schwimmkörper (1) wenigstens zwei Schwimm-Blöcke (11a, 11b) umfasst, die über ein Gelenk (12) drehbar an einander befestigt sind.

2. Einrichtung nach Anspruch 1, **dadurch gekennzeichnet, dass** der wenigstens eine Generator (8) so eingerichtet ist, dass er direkt durch das Übertragungsrad (2a, 2b) gedreht wird.

3. Einrichtung nach Anspruch 2, **dadurch gekennzeichnet, dass** sowohl das erste als auch das zweite Übertragungsrad (2a, 2b) mit einem mit ihnen verbundenen eigenen Generator (8) versehen sind.

4. Einrichtung nach Anspruch 1, **dadurch gekennzeichnet, dass** der wenigstens eine Generator (8) so eingerichtet ist, dass er durch das Übertragungsrad (2a, 2b) indirekt so gedreht wird, dass die Bewegung des Übertragungsrades (2a, 2b) umgewandelt zu dem Generator (8) übertragen wird.

5. Einrichtung nach Anspruch 4, **dadurch gekennzeichnet, dass** zwischen dem Übertragungsrad (2a, 2b) und dem Generator (8) ein mechanischer Umformer (9) angeordnet ist, der so eingerichtet ist, dass er rotierende Hin- und Herbewegung des Übertragungsrades (2a, 2b) in rotierende Bewegung in einer Richtung umwandelt, durch die der Generator gedreht wird.

6. Einrichtung nach einem der vorangehenden Ansprüche, **dadurch gekennzeichnet, dass** der flexible Maschinenteil (3) einen elektrischen Leiter (10) umfasst, der mit dem wenigstens einen Generator (8) verbunden ist und durch den Generator erzeugten elektrischen Strom von dem Schwimmkörper (1) weg leitet.

7. Einrichtung nach einem der vorangehenden Ansprüche, **dadurch gekennzeichnet, dass** der flexible Maschinenteil (3) zum Übertragen von Zug ein Drahtseil ist.

8. Einrichtung nach einem der vorangehenden Ansprüche, **dadurch gekennzeichnet, dass** die Verankerungseinrichtung (6) ein Befestigungselement (13) umfasst, das an einem Boden des Wasserbeckens angebracht ist.

## Revendications

1. Agencement pour récupérer l'énergie des vagues, comprenant :
un élément flottant (1) apte à flotter dans l'eau,
une première et une seconde roue de transmission (2a, 2b) agencées dans l'élément flottant (1) de manière rotative et espacées l'une de l'autre,
un élément mécanique souple de transmission de traction (3) agencé en contact de transmission de puissance avec la première et la seconde roue de transmission (2a, 2b), l'élément mécanique souple (3) s'étendant à ses deux extrémités à l'extérieur de l'élément flottant (1),
un contrepoids (4) agencé à une première extrémité (5) de l'élément mécanique souple (3),
des moyens d'ancrage (6) agencés à une seconde extrémité (7) de l'élément mécanique souple,
au moins un générateur (8) agencé dans l'élément flottant (1), et
des moyens pour convertir le mouvement de la première et de la seconde roue de transmission (2a, 2b) en un mouvement tournant le au moins un générateur (8), les roues de transmission (2a, 2b) sont agencées à distance du centre de gravité (G) de l'élément flottant (1), sur différents côtés de celui-ci, **caractérisé en ce que** l'élément flottant (1) comprend au moins deux blocs de flottaison (11a, 11b) fixés de manière pivotante l'un à l'autre par une articulation (12).

2. Agencement selon la revendication 1, **caractérisé en ce qu'**au moins un générateur (8) est agencé pour être entraîné en rotation directement par la roue de transmission (2a, 2b).

3. Agencement selon la revendication 2, **caractérisé en ce que** la première et la seconde roue de transmission (2a, 2b) sont toutes deux équipées d'un générateur (8) raccordé à celles-ci qui leur est propre.

4. Agencement selon la revendication 1, **caractérisé en ce qu'**au moins un générateur (8) est agencé pour être entraîné en rotation indirectement par la roue de transmission (2a, 2b) de sorte que le mouvement de la roue de transmission (2a, 2b) est transmis, converti, au générateur (8).

5. Agencemement selon la revendication 4, **caractérisé en ce qu'**entre la roue de transmission (2a, 2b) et le générateur (8) est connecté un redresseur mécanique (9) qui est agencé pour convertir le mouvement de rotation alternatif de la roue de transmission (2a, 2b) en un mouvement de rotation unidirectionnel faisant tourner le générateur.

6. Agencement selon l'une quelconque des revendications précédentes, **caractérisé en ce que** l'élément mécanique souple (3) comprend un conducteur électrique (10) connecté à au moins un générateur (8) pour conduire le courant électrique généré par le générateur à l'écart de l'élément flottant (1).

7. Agencement selon l'une quelconque des revendications précédentes, **caractérisé en ce que** l'élément mécanique souple de transmission de traction (3) est un câble métallique.

8. Agencement selon l'une quelconque des revendications précédentes, **caractérisé en ce que** les moyens d'ancrage (6) comprennent un élément de fixation (13) monté au fond du bassin d'eau.
